# FASCICULE DE BREVET EUROPEEN

(11) **EP 3 871 446 B1**
(45) Date de publication et mention de la délivrance du brevet: **08.02.2023**
(21) Numéro de dépôt: 19821034.6
(22) Date de dépôt: 03.12.2019
(51) Int. Cl.: H04W 48/08, H04W 12/50, H04W 12/04, H04W 84/12

(54) **PROCEDE DE CONFIGURATION AUTOMATIQUE PAR CANAL AUDIO D'UN DISPOSITIF SANS FIL**
VERFAHREN ZUR AUTOMATISCHEN KONFIGURATION EINER DRAHTLOSEN VORRICHTUNG DURCH EINEN AUDIOKANAL
METHOD FOR AUTOMATICALLY CONFIGURING A WIRELESS DEVICE BY AUDIO CHANNEL

(30) Priorité: 05.12.2018 FR 1872398
(43) Date de publication de la demande: 01.09.2021
(73) Titulaire: SAGEMCOM BROADBAND SAS, 92500 Rueil-Malmaison (FR)
(72) Inventeur: TOCHE, Clément, 92500 RUEIL MALMAISON (FR)
(74) Mandataire: Cabinet Le Guen Maillet
(86) Numéro de dépôt international: PCT/EP2019/083378
(87) Numéro de publication internationale: WO 2020/114994

(56) Documents cités:
- EP-A1- 3 065 486
- WO-A1-2015/100616
- CN-A- 108 718 460
- US-A1- 2018 132 298
- US-B2- 8 224 246

## Description

### DOMAINE TECHNIQUE

La présente invention concerne le domaine des réseaux de communication comprenant au moins un point d'accès sans fil conforme à l'une des normes IEEE 802.11 *(« Instituts of Electrical and Electronics Engineers* » en anglais), c'est-à-dire celui des réseaux de communication communément appelés réseaux « *Wi-Fi* »*.* La présente invention concerne plus particulièrement un procédé de configuration automatique d'un dispositif électronique pour se connecter à un point d'accès sans fil d'un tel réseau de communication.

### ETAT DE LA TECHNIQUE ANTERIEURE

Un réseau de communication (ci-après « réseau ») comprenant un point d'accès sans fil conforme à l'une des normes IEEE 802.11 comprend typiquement une pluralité de dispositifs électroniques ou noeuds. Parmi ces dispositifs électroniques, certains sont ainsi des points d'accès sans fil (ou WAP pour « Wireless Access Point » en anglais) permettant une connexion sans fil d'autres dispositifs électroniques - dits alors dispositifs électroniques clients - au réseau. La connexion sans fil d'un nouveau dispositif électronique client au réseau nécessite que ce nouveau dispositif électronique soit configuré avec des paramètres de configuration propres au réseau. Typiquement, les paramètres de configuration nécessaires pour se connecter à un point d'accès sans fil d'un réseau dit Wi-Fi sont le nom du réseau (ou SSID pour « Service Set Identifier » en anglais), un type de chiffrage utilisé et une clef de chiffrement, par exemple une clef dite WPA ou WPA2 (pour « Wi-Fi Protected Access » en anglais). Il est à noter qu'un tel réseau n'exclut pas la possibilité que des dispositifs électroniques puissent se connecter au réseau via des connexions filaires, par exemple via des connexions de type Ethernet.

Différents procédés de configuration d'un nouveau dispositif électronique client désirant se connecter via une connexion sans fil existent. Le dispositif électronique client peut comprendre une interface graphique permettant une saisie par un utilisateur des paramètres de configuration. Ce procédé est fastidieux pour l'utilisateur, qui de plus ne connaît pas forcément les paramètres nécessaires, et contraignant pour le dispositif électronique client, qui doit comprendre un dispositif de saisie et d'affichage. Des procédés plus intuitifs pour les utilisateurs ont été développés, comme le protocole WPS (pour « Wi-Fi Protected Setup » en anglais). Ce protocole WPS oblige toutefois l'utilisateur à presser des boutons sur le dispositif électronique et/ou un point d'accès du réseau ou bien à saisir un code. Ce protocole n'est pas adapté en cas de point d'accès peu accessible, et reste compliqué pour un utilisateur non averti. On note de plus que ce protocole WPS a été l'objet de plusieurs failles de sécurité. D'autres solutions existent, par exemple avec l'utilisation de tags NFC (pour « Near Field Communication » en anglais) ou RFID (pour « Radio Frequency IDentification » en anglais), ces solutions nécessitant alors l'intégration de lecteurs compatibles dans les dispositifs électroniques du réseau, ce qui complique la conception de ces dispositifs électroniques et augmente leurs coûts pour *in fine* une fonctionnalité qui est peu utilisée.

Le document US 8 224 246 B2 décrit un procédé de configuration automatique d'un dispositif Wi-Fi en envoyant des mots-clés par des signaux NFC.

Les documents US 2018/132298 A1, WO 2015/100616 A1, EP 3 065 486 et CN 108 718 460 A décrivent un procédé de configuration automatique d'un dispositif Wi-Fi en envoyant des mots-clés par des signaux audio.

Il est donc nécessaire de proposer un procédé permettant de pallier ces inconvénients, particulièrement en limitant au maximum les interventions ou déplacements d'un utilisateur potentiellement peu averti.

### EXPOSE DE L'INVENTION

L'invention concerne un procédé de configuration automatique d'un premier dispositif électronique pour se connecter à un point d'accès sans fil d'un réseau de communication, le premier dispositif électronique comprenant un module réseau, adapté pour recevoir et émettre des messages dits réseaux sur le réseau de communication, et étant adapté pour recevoir et émettre un signal audio, le procédé comprenant les étapes suivantes exécutées par un deuxième dispositif électronique, connecté au réseau de communication via un module réseau et étant adapté pour recevoir un signal audio, de :
- recevoir un premier message audio en provenance du premier dispositif électronique,
- déterminer si ce premier message audio correspond à un premier mot clef prédéterminé,
- si oui, émettre un premier message réseau, le premier message réseau comprenant une indication de détection du premier mot clef, une indication de qualité de réception associée au premier message audio et un identifiant du deuxième dispositif électronique, puis,
- recevoir un troisième message audio en provenance du premier dispositif électronique,
- déterminer si ce troisième message audio correspond à un troisième mot clef prédéterminé,
- si oui, émettre un deuxième message réseau, le deuxième message réseau comprenant une indication de détection du troisième mot clef, une indication de qualité de réception associée au troisième message audio et un identifiant du deuxième dispositif électronique,
et les étapes suivantes, exécutées par un troisième dispositif électronique connecté au réseau de communication via un module réseau et étant adapté pour émettre un signal audio, de :
- recevoir au moins le premier message réseau via le réseau de communication,
- enregistrer dans une mémoire au moins les données reçues dans le premier message réseau,
- déterminer, en fonction des données enregistrées dans la mémoire, une liste ordonnée de dispositifs électroniques connectés au réseau de communication et adaptés pour émettre un message audio,
- si le troisième dispositif électronique est le premier de la liste ordonnée, alors émettre un deuxième message audio comprenant un deuxième mot clef prédéterminé et attendre un premier temps d'attente prédéterminé :
   ∘ en l'absence de réception du deuxième message réseau à expiration du premier temps d'attente, émettre un troisième message réseau indiquant la non réception du deuxième message réseau, ou,
   ∘ émettre un quatrième message réseau indiquant la bonne réception du deuxième message réseau,
- sinon, si réception d'un message réseau indiquant la non réception du deuxième message réseau par le premier dispositif électronique de la liste ordonnée ou bien après expiration d'un deuxième temps d'attente prédéterminé, supérieur au premier temps d'attente, mettre à jour la liste ordonnée en supprimant le premier dispositif électronique de la liste ordonnée et revenir à l'étape précédente avec la liste ordonnée mise à jour,
- si le troisième dispositif électronique a reçu le deuxième message réseau indiquant que le deuxième message audio a été reçu par le premier dispositif électronique, alors émettre un quatrième message audio comprenant des paramètres de configuration pour le premier dispositif électronique afin de se connecter au réseau de communication.

Selon un mode de réalisation complémentaire de l'invention, les étapes du procédé sont exécutées par un même dispositif électronique adapté pour recevoir et émettre un message audio.

Selon un mode de réalisation complémentaire de l'invention, le premier dispositif électronique comprenant un premier module réseau adapté pour se connecter au réseau de communication et un deuxième module réseau adapté pour se connecter à un quatrième dispositif électronique, le quatrième dispositif électronique comprenant un émetteur audio et/ou un récepteur audio, le premier dispositif électronique est adapté pour, une fois connecté au quatrième dispositif électronique, émettre et/ou recevoir un message audio via le quatrième dispositif électronique.

L'invention concerne également un procédé de configuration automatique d'un dispositif électronique pour se connecter à un point d'accès sans fil d'un réseau de communication, le dispositif électronique comprenant un module radio, adapté pour se connecter au point d'accès sans fil du réseau de communication, et étant adapté pour recevoir et émettre un signal audio, le procédé comprenant les étapes suivantes exécutée par le dispositif électronique :
- émettre un premier message audio comprenant un premier mot clef prédéterminé,
- recevoir un deuxième message audio,
- déterminer si ce deuxième message audio correspond à un deuxième mot clef prédéterminé,
- si oui, alors émettre un troisième message audio comprenant un troisième mot clef prédéterminé, et
- recevoir un quatrième message audio comprenant des paramètres de configuration afin de se connecter au point d'accès sans fil du réseau de communication,
- configurer le module radio afin de se connecter au point d'accès sans fil du réseau de communication.

L'invention concerne également un dispositif électronique comprenant un module réseau permettant de se connecter à un réseau de communication et un module audio adapté pour recevoir un signal audio, le dispositif électronique étant adapté pour exécuter les étapes du procédé objet de l'invention exécutées par le deuxième dispositif électronique.

L'invention concerne également un dispositif électronique comprenant un module réseau permettant de se connecter à un réseau de communication et un module audio adapté pour émettre un signal audio, le dispositif électronique étant adapté pour exécuter les étapes du procédé objet de l'invention exécutées par le troisième dispositif électronique.

L'invention concerne également un dispositif électronique comprenant un module réseau permettant de se connecter à un réseau de communication et un module audio adapté pour recevoir et émettre un signal audio, le dispositif électronique étant adapté pour exécuter les étapes du procédé objet de l'invention.

L'invention concerne également un dispositif électronique comprenant un module radio permettant de se connecter à un point d'accès sans fil d'un réseau de communication et un module audio adapté pour recevoir et émettre un signal audio, le dispositif électronique étant adapté pour exécuter les étapes du procédé objet de l'invention.

L'invention concerne également un système pour une configuration automatique d'un premier dispositif électronique pour se connecter à un point d'accès sans fil d'un réseau de communication, le premier dispositif électronique comprenant un module radio, adapté pour se connecter au point d'accès sans fil du réseau de communication, et étant adapté pour recevoir et émettre un signal audio, le système comprenant au moins :
- un dispositif électronique comprenant un module réseau permettant de se connecter à un réseau de communication et un module audio adapté pour recevoir un signal audio, le dispositif électronique étant adapté pour exécuter les étapes du procédé objet de l'invention exécutées par le deuxième dispositif électronique et un dispositif électronique comprenant un module réseau permettant de se connecter à un réseau de communication et un module audio adapté pour émettre un signal audio, le dispositif électronique étant adapté pour exécuter les étapes du procédé objet de l'invention exécutées par le troisième dispositif électronique connectés au réseau de communication, ou bien,
- un dispositif électronique comprenant un module réseau permettant de se connecter à un réseau de communication et un module audio adapté pour recevoir et émettre un signal audio, le dispositif électronique étant adapté pour exécuter les étapes du procédé objet de l'invention connecté au réseau de communication.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement l'architecture d'un réseau de communication comprenant une pluralité de dispositifs électroniques dont des points d'accès sans fil par exemple conforme à une norme IEEE 802.11,
[Fig. 2] illustre schématiquement les principales étapes d'un procédé de configuration automatique d'un dispositif électronique pour se connecter à un point d'accès sans fil d'un réseau de communication selon un mode de réalisation de l'invention,
[Fig. 3] illustre schématiquement l'architecture matérielle d'un dispositif électronique d'un réseau de communication, le dispositif électronique étant adapté pour exécuter tout ou partie des étapes du procédé de configuration automatique d'un dispositif électronique pour se connecter à un point d'accès sans fil d'un réseau de communication, selon un mode de réalisation décrit ci-après.

### EXPOSE DETAILLE DE MODES DE REALISATION

L'invention se propose d'établir dans un premier temps un canal audio de communication entre un nouveau dispositif électronique devant être connecté à un réseau et un dispositif électronique déjà connecté au réseau. Les paramètres de configuration du réseau, permettant de se connecter à un point d'accès sans fil, peuvent alors dans un second temps être transmis par ce canal audio au nouveau dispositif électronique, ce dernier pouvant alors se configurer correctement pour se connecter à un point d'accès sans fil du réseau. L'invention peut utiliser une pluralité de dispositifs électroniques connectés au réseau pour « écouter » le nouveau dispositif électronique lorsque celui-ci émet un message audio. De même, l'invention permet de sélectionner, parmi la pluralité de dispositifs électroniques capables d'émettre un message audio vers le nouveau dispositif électronique, le dispositif électronique le plus adapté pour cette émission du signal audio.

L'invention concerne un procédé adapté à des dispositifs électroniques conformes à une norme IEEE 802.11.

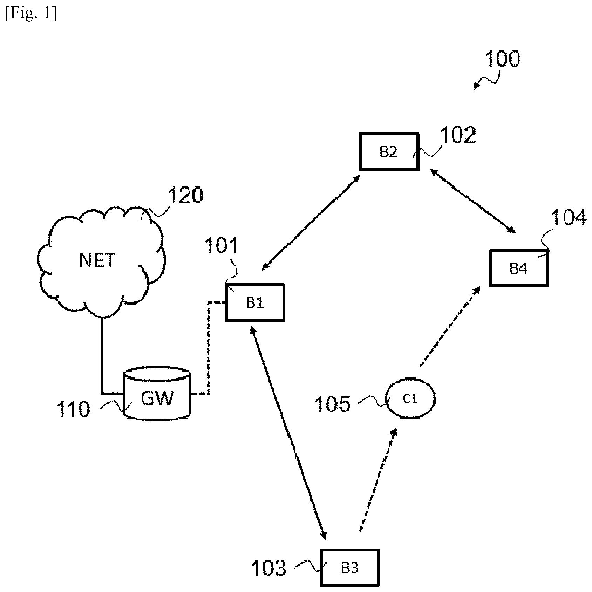

La **Fig. 1** illustre de façon très schématique un réseau de communication 100, comprenant au moins un point d'accès sans fil par exemple de type Wi-Fi ou IEEE 802.11. Le réseau de communication 100 (ci-après « réseau 100 ») comprend une passerelle 110 (ou « *gateway* » en anglais) et une pluralité de dispositifs électroniques B1 101, B2 102, B3 103, B4 104. La passerelle 110 permet une interconnexion du réseau 100 avec un réseau 120, par exemple le réseau Internet 120. Dans cet exemple, les dispositifs électroniques B1, B2, B3 et B4 peuvent être des dispositifs électroniques dits de collectes. Ces noeuds B1, B2, B3 et B4 constituent alors une infrastructure dite de collecte (« *backhaul* ») du réseau 100. Les dispositifs électroniques B1, B2, B3, B4 peuvent aussi être des points d'accès sans fil connectés à la même passerelle 110.

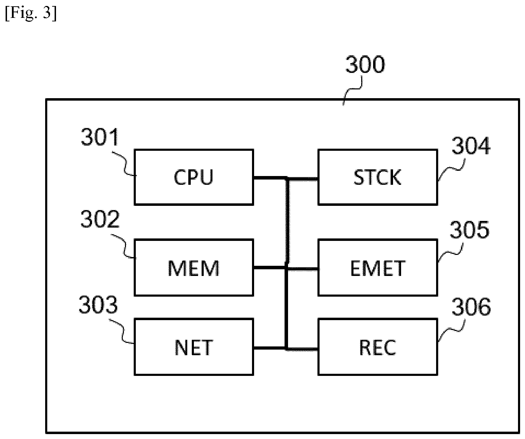

Chaque dispositif électronique B1 101, B2 102, B3 103, B4 104 comprend un module réseau permettant de se connecter au réseau 100. Typiquement, un module réseau est un module radio permettant une connexion sans fil au réseau de communication, le module radio étant par exemple compatible avec une norme de type Wi-Fi ou IEEE 802.11. Un module réseau peut aussi être un module réseau dit filaire, par exemple un module réseau de type Ethernet. Ainsi, le réseau 100 peut comprendre des dispositifs électroniques connectés via une connexion sans fil dite Wi-Fi, mais aussi des dispositifs électroniques connectés via une connexion filaire, par exemple Ethernet. Un dispositif électronique dit point d'accès sans fil peut comprendre un premier module réseau, de type sans fil ou filaire, le premier module réseau étant adapté pour connecter le dispositif électronique au réseau de communication, et un deuxième module réseau, de type sans fil (ou radio), afin de permettre une connexion d'un autre dispositif électronique via une connexion sans fil. Chaque dispositif électronique B1 101, B2 102, B3 103, B4 104 peut comprendre de plus un module audio adapté pour recevoir et/ou émettre un signal audio. L'architecture matérielle d'un tel dispositif électronique est décrite ci-après en Fig. 3.

Le dispositif électronique C1 105 est un dispositif électronique non encore configuré pour se connecter au réseau 100. L'objet de l'invention est de proposer un procédé permettant de configurer aisément ce dispositif électronique C1 105 pour qu'il se connecte à un point d'accès sans fil du réseau 100. Le dispositif électronique C1 105 comprend un module radio, adapté pour - une fois configuré - permettre une connexion sans fil à un point d'accès sans fil du réseau 100. Le dispositif électronique C1 105 peut comprendre un module audio adapté pour recevoir et émettre un signal audio.

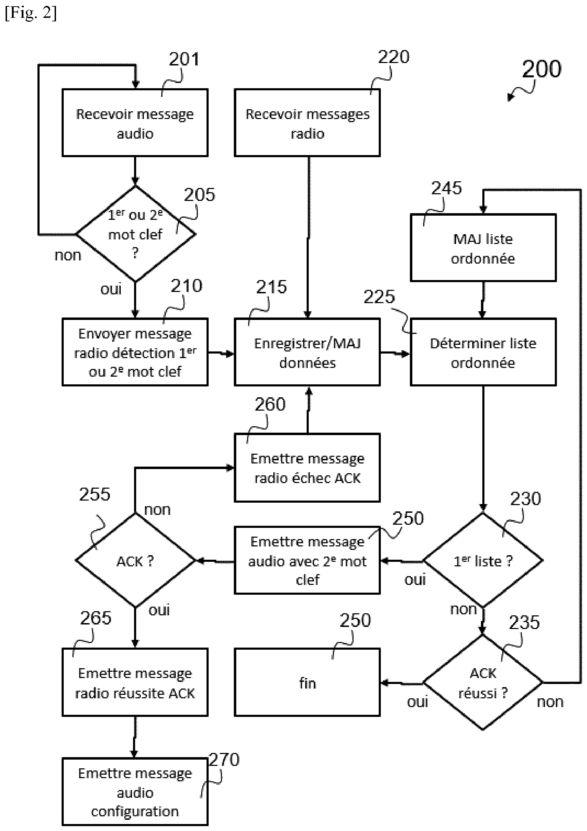

La **Fig. 2** illustre schématiquement les principales étapes d'un procédé 200 de configuration automatique d'un dispositif électronique C1 105 pour se connecter à un point d'accès sans fil du réseau 100 selon un mode de réalisation de l'invention.

Le procédé 200 est exécuté par un ou plusieurs dispositifs électroniques connectés au réseau 100, possiblement tous. Ainsi, chaque dispositif électronique connecté au réseau 100 peut exécuter tout ou partie des étapes du procédé 200. Chaque dispositif électronique connecté au réseau 100 peut être connecté à ce réseau 100 via un module réseau de type filaire ou sans fil, par exemple un module réseau de type Wi-Fi ou un module réseau de type Ethernet.

Le procédé 200 est possiblement exécuté périodiquement. Le procédé 200 peut avantageusement être exécuté suite à une action d'un utilisateur, par exemple un appui sur un bouton d'un dispositif électronique connecté au réseau 100 ou d'un dispositif électronique à connecter au réseau 100. Alternativement, de façon complémentaire, le procédé 200 peut être déclenché par un évènement prédéterminé, par exemple, comme décrit ci-après, la détection par un dispositif électronique connecté au réseau 100 d'un mot clef dans un signal audio reçu, cette détection déclenchant le procédé 200 de configuration.

Dans une première étape 201, un dispositif électronique B1 101, B2 102, B3 103 ou B4 104 du réseau 100 comprenant un module audio adapté pour recevoir un signal audio reçoit un premier message audio, sous la forme d'un signal audio. Ce signal audio est émis par le nouveau dispositif électronique C1 105 destiné à être connecté à un point d'accès sans fil du réseau 100. Ainsi, un utilisateur peut déclencher la lecture audio par le dispositif électronique C1 105 d'un signal audio pour déclencher le procédé de configuration. Le dispositif électronique C1 105 comprend, dans une mémoire, un premier mot clef, ce premier mot clef est émis par le dispositif électronique C1 105. A noter que ce premier mot clef peut correspondre à toute chaîne de mots. Selon le mode de réalisation de l'invention, le signal audio émis peut être émis sur une bande de fréquence audible, ultrasonore, ou toute autre bande de fréquence audio.

Dans une étape suivante 205, le dispositif électronique B1 101, B2 102, B3 103 ou B4 104 du réseau 100 détermine si ce premier message audio correspond au premier mot clef prédéterminé. Ainsi, le dispositif électronique B1 101, B2 102, B3 103 ou B4 104 a aussi enregistré dans une mémoire ce premier mot clef. Ce premier mot clef peut être propre à un constructeur ou à un opérateur de réseau et être configuré préalablement dans le dispositif électronique B1 101, B2 102, B3 103 ou B4 104 du réseau 100 et dans le dispositif électronique C1 105. Alternativement, un utilisateur peut configurer manuellement sur l'un ou l'autre des dispositifs électroniques le premier mot clef. Si lors de l'étape 205, il est déterminé que le premier message audio ne comprend pas le premier mot clef, alors le procédé 200 repasse à l'étape 201. Ces étapes 201 et 205 peuvent correspondre à un processus continu d'écoute par un dispositif électronique. Le dispositif électronique B1 101, B2 102, B3 103 ou B4 104 peut mettre en oeuvre des procédés connus de détection de mots clefs dans un signal audio.

Si le premier mot clef est détecté dans le premier message audio, alors, chaque dispositif électronique connecté au réseau 100 ayant détecté ce premier mot clef envoie un premier message, dit message réseau, sur le réseau 100, possiblement à destination de tous les dispositifs électroniques connectés, le premier message réseau comprenant une indication de détection du premier mot clef, une indication de qualité de réception associée au premier message audio et un identifiant du deuxième dispositif électronique. Si le dispositif électronique est connecté au réseau 100 via un module réseau sans fil, par exemple de type Wi-Fi, alors le message réseau est un message radio et le module réseau est un module radio. Ce premier message peut être conforme à une norme d'échange de type « zeroconf » (norme développée par l'IETF, pour « Internet Engineering Task Force » en anglais), « Bonjour » (à l'origine, implémentation de la norme zeroconf par la société « Apple ») ou « mDNS » (pour « Multicast DNS » en anglais, protocole développé par la société « Apple »). Selon un mode de réalisation de l'invention, chaque dispositif électronique met en oeuvre une implémentation logicielle de ce protocole via la bibliothèque logicielle « Avahi » (ou bien la bibliothèque logicielle « Bonjour » développée par « Apple »). Chaque dispositif électronique peut ainsi diffuser (« ou « broadcast » en anglais) un premier message réseau comprenant un identifiant du dispositif électronique, une information de détection du premier mot clef et une indication de qualité de réception du premier message audio. Cette indication de qualité peut correspondre à un niveau de puissance de réception du message audio. Dit autrement, cette indication de qualité permet de savoir si le premier message audio a été reçu avec un fort signal audio ou un faible signal audio, ce qui peut être une indication de la proximité du dispositif électronique concerné avec le dispositif électronique C1 105.

Ainsi, dans une étape parallèle 220, chaque dispositif électronique B1 101, B2 102, B3 103 ou B4 104 peut recevoir un message réseau émis par un ou plusieurs autres dispositifs électroniques du réseau 100, chaque message réseau comprenant de même un identifiant du dispositif électronique ayant reçu le premier signal audio, une information de détection du premier mot clef et une indication de qualité de réception du premier message audio par ledit dispositif électronique. Chaque message correspond à un premier message réseau émis par un autre dispositif électronique connecté au réseau 100 et ayant reçu le premier message audio.

Dans une étape 215, chaque dispositif électronique B1 101, B2 102, B3 103 ou B4 104 enregistre dans une mémoire les données du premier message audio reçu, et donc émises dans le premier message réseau, mais aussi celles reçues via des messages réseaux émis par d'autres dispositifs électroniques ayant aussi détecté un signal audio avec le premier mot clef. Cette situation correspond à un dispositif électronique C1 105 émettant un signal audio avec le premier mot clef à portée de plusieurs dispositifs électroniques connectés au réseau 100 et étant adapté pour recevoir un signal audio.

Dans cette étape 215, chaque dispositif électronique connecté au réseau 100 se constitue une base de données comprenant une information des dispositifs électroniques ayant reçu le premier message audio (c'est-à-dire « entendu » le dispositif électronique C1 105 émettre le premier mot clef), ainsi qu'une information sur la qualité de réception dudit message. Cette base de données peut correspondre à une base de données connues telle que définie par les protocoles précités, la base de données connue étant enrichie par les données ou informations concernant la réception et détection du premier mot clef par chaque dispositif électronique connecté.

Dans une étape suivante 225, chaque dispositif électronique détermine, en fonction des données enregistrées dans la mémoire, particulièrement lors de l'étape 215, une liste ordonnée de dispositifs électroniques connectés au réseau de communication et adaptés pour émettre un message audio.

Selon un mode de réalisation de l'invention, la liste ordonnée est ainsi constituée :
- seuls les dispositifs électroniques étant adaptés pour émettre un message audio sont intégrés dans la liste ordonnée,
- les dispositifs électroniques ayant reçu le premier message audio constituent la première partie de la liste, les dispositifs électroniques n'ayant pas reçu le premier message audio constituent la deuxième partie de la liste,
- la première partie de la liste est ordonnée en fonction de l'indicateur de qualité de réception du premier message audio, le premier élément de la liste étant donc le dispositif électronique ayant reçu le premier message audio avec la meilleure qualité,
- la deuxième partie de la liste est ordonnée selon un critère arbitraire, par exemple un classement alphabétique d'une adresse MAC (pour « Media Access Control » en anglais) de chaque dispositif électronique ou bien de l'identifiant.

Ainsi, lors de cette étape 225, les dispositifs électroniques connectés au réseau 100 et susceptibles d'émettre un message audio au dispositif électronique C1 105 sont ordonnés du plus susceptible d'être reçu par le dispositif électronique C1 105 au moins susceptible de l'être.

Selon le mode de réalisation de l'invention, le procédé peut être distribué, chaque dispositif électronique connecté au réseau 100 gérant une base de données propre, chaque base de données étant censée être identique. Selon un autre mode de réalisation de l'invention, le procédé peut être centralisé, un dispositif électronique connecté au réseau étant choisi pour gérer une base de données et contrôler les autres dispositifs électroniques du réseau 100.

Dans une étape 230, si le dispositif électronique connecté au réseau 100 et exécutant le procédé 200 est celui classé en première position dans la liste ordonnée, alors, dans une étape 250, celui-ci émet un deuxième message audio comprenant un deuxième mot clef prédéterminé. Le dispositif électronique attend ensuite un premier temps d'attente prédéterminé une éventuelle confirmation de réponse du dispositif électronique C1 105. Il est à noter que le dispositif électronique ayant émis le message audio lors de cette étape 230 n'est pas forcément adapté pour recevoir un message audio, le message audio de réponse du dispositif électronique C1 105 peut donc être reçu par un autre dispositif électronique connecté au réseau 100, ce dernier dispositif électronique diffusant ensuite dans le réseau 100 un message réseau comprenant l'information de réception de la réponse audio du dispositif électronique C1 105.

Dans une étape 255, le dispositif électronique ayant émis le deuxième message audio reçoit un deuxième message réseau indiquant la bonne réception par le dispositif électronique C1 105 du deuxième message audio. Ce deuxième message réseau est émis par chaque dispositif électronique connecté au réseau 100 ayant reçu la réponse du dispositif électronique C1 105, dans l'hypothèse où ce dispositif électronique C1 105 a bien reçu le deuxième message audio et répondu par l'émission d'un troisième message audio (ou acquittement audio). Il est à noter que chaque message audio peut comprendre un mot clef, mot clef qui est prédéterminé et partagé, de manière similaire au premier mot clef comme décrit ci-avant. Par recevoir un message audio, on peut donc comprendre recevoir et détecter un mot clef compris dans le message audio comme décrit dans les étapes 201 et 205. Similairement, à chaque réception et détection d'un mot clef, chaque dispositif électronique émet un message réseau, comme dans l'étape 210, afin de diffuser l'information de réception. Chaque dispositif électronique peut donc alors mettre à jour sa base de données (étape 215 exécutée en continu en fonction de la réception des messages réseaux comprenant des informations pertinentes concernant la réception de messages audio).

Ainsi, dans une étape 201, le dispositif électronique C1 105 émet un premier message audio comprenant un mot clef, le message audio étant reçu par au moins un dispositif électronique connecté au réseau et ce mot clef étant détecté. L'information, après diffusion dans le réseau 100, permet, dans une étape 225, de sélectionner le dispositif électronique meilleur candidat à l'émission d'un message audio en retour à destination du dispositif électronique C1 105. Ce dernier confirme par l'émission d'un troisième message audio la bonne réception du deuxième message audio, le canal audio entre le dispositif électronique C1 105 et la pluralité des dispositifs électroniques connectés au réseau 100 est établi. A noter que dans une étape 265, le dispositif électronique ayant émis le message audio lors de l'étape 250 et ensuite reçu confirmation de sa bonne réception lors de l'étape 255, émet un message réseau à destination des autres dispositifs électroniques connectés au réseau 100 afin de les prévenir que le canal audio est établi et qu'il n'est plus utile de continuer à essayer d'établir ce canal audio. Dit autrement, une fois ce message diffusé, aucun autre dispositif électronique connecté au réseau 100 n'essaye d'émettre un deuxième message audio.

Le canal audio étant établi, dans une étape 270, le dispositif électronique connecté au réseau 100 peut émettre un ou plusieurs messages audio comprenant des informations de configuration (par exemple un SSID et un mot de passe correspondants à un point d'accès sans fil du réseau 100) à destination du dispositif électronique C1 105. Possiblement ces messages sont chiffrés ou bien signés. Une clef de chiffrement partagée peut être préalablement définie dans chaque dispositif électronique, par exemple par le fabricant ou un opérateur du réseau 100.

Une fois configuré, le dispositif électronique C1 105 peut se connecter à un point d'accès sans fil du réseau 100. Selon un mode de réalisation de l'invention, le dispositif électronique C1 105, une fois connecté à un point d'accès sans fil du réseau 100, envoie un message réseau indiquant que la configuration a réussi, mettant ainsi fin au procédé 200 Selon un mode de réalisation complémentaire, le dispositif électronique C1 105, une fois configuré, émet un message audio indiquant que le procédé de configuration a bien réussi. Ainsi, un utilisateur du dispositif électronique C1 105 est informé de la bonne mise en oeuvre du procédé de configuration 200. Une fois connecté à un point d'accès sans fil du réseau 100, le dispositif électronique C1 105 peut exécuter les étapes du procédé 200 pour possiblement contribuer à la configuration d'un nouveau dispositif électronique client à connecter au réseau 100.

Lors de l'étape 230, le dispositif électronique sélectionné, c'est-à-dire le premier de la liste ordonné, émet le deuxième message audio comprenant un deuxième mot clef prédéterminé et attend un premier temps d'attente prédéterminé (étape 255), puis :
∘ en l'absence de réception du deuxième message réseau à expiration du premier temps d'attente, émet (étape 260) un troisième message réseau indiquant la non réception du deuxième message réseau, ou,
∘ émet (étape 265) un quatrième message réseau indiquant la bonne réception du deuxième message réseau.

Dit autrement, le dispositif électronique sélectionné pour émettre le deuxième message audio, suite à l'émission de ce deuxième message audio, attend au maximum un délai correspondant au premier temps d'attente prédéterminé la réception de confirmation de bonne réception du deuxième message audio.

Durant le temps d'attente de l'étape 255, s'il reçoit la confirmation de bonne réception du deuxième message audio par le dispositif électronique C1 105 (soit directement par la réception du troisième message audio s'il est adapté pour recevoir un signal audio et détecter le troisième mot clef, soit indirectement, par un message réseau de réception par un autre dispositif électronique connecté au réseau 100) alors le dispositif électronique connecté au réseau 100 envoie un quatrième message réseau (étape 265) indiquant la bonne réception du deuxième message audio par le dispositif électronique C1 105.

Chaque dispositif électronique non sélectionné, c'est-à-dire tous les dispositifs électroniques de la liste ordonnée sauf le premier, dans une étape 235, reçoivent ce quatrième message réseau de confirmation et pour eux le procédé 200 prend fin (étape 250).

A l'inverse, si le dispositif électronique connecté au réseau 100 ayant émis le deuxième message audio ne reçoit aucune réponse à l'expiration du premier temps d'attente, alors ce dispositif électronique émet un troisième message radio indiquant une non réception du deuxième message réseau (étape 260) et se supprime de la première position de la liste ordonnée, l'information étant diffusée à tous les dispositifs électroniques connectés (étape 215). Une nouvelle liste ordonnée est mise à jour dans une nouvelle étape 225, et un nouveau dispositif électronique est sélectionné pour émission du deuxième signal audio dans une étape 230.

Par ailleurs, chaque dispositif électronique non sélectionné, c'est-à-dire tous les dispositifs électroniques de la liste ordonnée sauf le premier, dans une étape 235, reçoivent le troisième message réseau de non réception. Ces dispositifs électroniques considèrent alors que le choix du dispositif électronique en première position dans la liste ordonnée n'est pas judicieux. Chaque dispositif électronique repasse alors à l'étape 245 en supprimant le premier dispositif électronique de la liste ordonnée. Les étapes 230 et suivantes sont répétées jusqu'à ce qu'une réponse au deuxième message audio soit reçue.

Il est à noter que, lors de l'étape 255, dans le cas où le dispositif électronique connecté au réseau 100 est à la fois adapté pour recevoir et émettre des signaux audio, et qu'il reçoit directement le deuxième message audio émis par le dispositif électronique C1 105, alors le deuxième message réseau est fictif car échangé au sein de ce même dispositif électronique. Le deuxième message réseau est alors un message interne, échangé entre blocs logiciels (étapes 201, 205 et 210 internes au même dispositif électronique).

Les étapes du procédé 200 peuvent être exécutées en parallèle par une pluralité de dispositifs électroniques connectés au réseau 100. Un même dispositif électronique adapté pour recevoir et émettre des signaux audio peut exécuter les étapes de réception d'un signal audio (étapes 201, 205 et 210) ou possiblement d'émission d'un signal audio (étapes 230, 250, 255, 260, 265 et 270).

La **Fig. 3** illustre schématiquement l'architecture matérielle d'un dispositif électronique B1 101, B2 102, B3 103, B4 104 d'un réseau de communication 100, le dispositif électronique étant adapté pour exécuter tout ou partie des étapes du procédé 200 de configuration automatique d'un dispositif électronique pour se connecter à un point d'accès sans fil d'un réseau de communication, selon un mode de réalisation décrit ci-avant.

Ainsi, le dispositif électronique 300 comprend, reliés par un bus de communication : un processeur ou CPU (« *Central Processing Unit* » en anglais) 301 ; une mémoire MEM 302 de type RAM (« *Random Access Memory* » en anglais) et/ou ROM (« *Read Only Memory* » en anglais), un module réseau NET 303 de type module radio ou filaire, adapté pour connecter le dispositif électronique 300 au réseau 100, un module de stockage STCK 304 de type stockage interne et possiblement un module 305 adapté pour émettre un signal audio et/ou un module 306 adapté pour recevoir un signal audio. Le dispositif électronique 300 peut comprendre en outre un module radio (non représenté), par exemple de type Wi-Fi, ce module radio étant adapté pour connecter un dispositif électronique au dispositif électronique 300, et possiblement au réseau 100. On dit alors que le dispositif électronique 300 est un point d'accès sans fil. Le module de stockage STCK 504 peut être de type disque dur HDD (« *Hard Disk Drive* » en anglais) ou SSD (« *Solid-State Drive* » en anglais), ou de type lecteur de support de stockage externe, tel un lecteur de cartes SD (« *Secure Digital »* en anglais), le lecteur comprenant une telle carte SD. Le processeur CPU 301 peut enregistrer des données, ou informations, dans la mémoire MEM 302 ou dans le module de stockage STCK 304. Le processeur CPU 301 peut lire des données enregistrées dans la mémoire MEM 302 ou dans le module de stockage STCK 304. Ces données peuvent correspondre à des paramètres de configuration. Le module réseau NET 303 permet typiquement la connexion du dispositif électronique 300 à un réseau sans fil de type Wi-Fi ou à un réseau filaire de type Ethernet. Le module 305 adapté pour émettre un signal audio peut être un haut-parleur. Le module 306 adapté pour recevoir un signal audio peut être un microphone. Le module 305 et le module 306 peuvent être un seul et même module adapté pour émettre et/ou recevoir.

Le processeur CPU 301 est capable d'exécuter des instructions chargées dans la mémoire MEM 302, par exemple à partir du module de stockage STCK 304. Lorsque le dispositif électronique 300 est mis sous tension, le processeur CPU 301 est capable de lire de la mémoire MEM 302 des instructions et de les exécuter. Ces instructions forment un programme d'ordinateur causant la mise en oeuvre, par le processeur CPU 301, de tout ou partie des procédés et étapes décrits ci-avant, particulièrement le procédé décrit dans la Fig. 2. Ainsi, tout ou partie des procédés et étapes décrits ci-avant peut être implémenté sous forme logicielle par exécution d'un ensemble d'instructions par une machine programmable, telle qu'un DSP (« *Digital Signal Processor »* en anglais) ou un microcontrôleur. Tout ou partie des procédés et étapes décrits ici peuvent aussi être implémentés sous forme matérielle par une machine ou un composant dédié, tel qu'un FPGA (« *Field-Programmable Gate Array »* en anglais) ou un ASIC (« *Application-Specific Integrated Circuit »* en anglais). Les fonctions du dispositif électronique 300 peuvent être intégrées dans un dispositif électronique d'un réseau sans fil conforme à une norme 802.11 IEEE par une mise à jour d'un logiciel, c'est-à-dire par exemple par une mise à jour du microprogramme (« *firmware* » en anglais) du dispositif électronique 300.

L'invention concerne ainsi un dispositif électronique comprenant un module réseau permettant de se connecter à un réseau de communication et un module audio adapté pour recevoir un signal audio, le dispositif électronique étant adapté pour exécuter toutes ou une partie des étapes du procédé 200 décrit ci-avant.

L'invention concerne ainsi un dispositif électronique comprenant un module réseau permettant de se connecter à un réseau de communication et un module audio adapté pour émettre un signal audio, le dispositif électronique étant adapté pour exécuter toutes ou une partie des étapes du procédé 200 décrit ci-avant.

L'invention peut aussi concerner un dispositif électronique comprenant un module radio permettant de se connecter à point d'accès sans fil d'un réseau de communication et un module audio adapté pour recevoir et émettre un signal audio, le dispositif électronique étant adapté pour exécuter toutes ou une partie des étapes du procédé 200 décrit ci-avant.

L'invention concerne un système pour une configuration automatique d'un premier dispositif électronique pour se connecter à un point d'accès sans fil d'un réseau de communication, le premier dispositif électronique comprenant un module radio, adapté pour se connecter au point d'accès sans fil du réseau de communication, et étant adapté pour recevoir et émettre un signal audio, le système comprenant au moins :
- un dispositif électronique comprenant un module réseau permettant de se connecter à un réseau de communication et un module audio adapté pour recevoir un signal audio, le dispositif électronique étant adapté pour exécuter toutes ou une partie des étapes du procédé 200 décrit ci-avant, et,
- un dispositif électronique comprenant un module réseau permettant de se connecter à un réseau de communication et un module audio adapté pour émettre un signal audio, le dispositif électronique étant adapté pour exécuter toutes ou une partie des étapes du procédé 200 décrit ci-avant, ou bien,
- un dispositif électronique comprenant un module radio permettant de se connecter à un réseau de communication et un module audio adapté pour recevoir et émettre un signal audio, le dispositif électronique étant adapté pour exécuter toutes ou une partie des étapes du procédé 200 décrit ci-avant.

## Revendications

1. Procédé de configuration automatique d'un premier dispositif électronique pour se connecter à un point d'accès sans fil d'un réseau de communication, le premier dispositif électronique comprenant un module réseau, adapté pour recevoir et émettre des messages dits réseaux sur le réseau de communication, et étant adapté pour recevoir et émettre un signal audio, le procédé comprenant les étapes suivantes exécutées par un deuxième dispositif électronique, connecté au réseau de communication via un module réseau et étant adapté pour recevoir un signal audio, de :
- recevoir un premier message audio en provenance du premier dispositif électronique,
- déterminer si ce premier message audio correspond à un premier mot clef prédéterminé,
- si oui, émettre un premier message réseau, le premier message réseau comprenant une indication de détection du premier mot clef, une indication de qualité de réception associée au premier message audio et un identifiant du deuxième dispositif électronique, puis,
- recevoir un troisième message audio en provenance du premier dispositif électronique,
- déterminer si ce troisième message audio correspond à un troisième mot clef prédéterminé,
- si oui, émettre un deuxième message réseau, le deuxième message réseau comprenant une indication de détection du troisième mot clef, une indication de qualité de réception associée au troisième message audio et un identifiant du deuxième dispositif électronique,
et les étapes suivantes, exécutées par un troisième dispositif électronique connecté au réseau de communication via un module réseau et étant adapté pour émettre un signal audio, de :
- recevoir au moins le premier message réseau via le réseau de communication,
- enregistrer dans une mémoire au moins les données reçues dans le premier message réseau,
- déterminer, en fonction des données enregistrées dans la mémoire, une liste ordonnée de dispositifs électroniques connectés au réseau de communication et adaptés pour émettre un message audio,
- si le troisième dispositif électronique est le premier de la liste ordonnée, alors émettre un deuxième message audio comprenant un deuxième mot clef prédéterminé et attendre un premier temps d'attente prédéterminé :
- en l'absence de réception du deuxième message réseau à expiration du premier temps d'attente, émettre un troisième message réseau indiquant la non réception du deuxième message réseau, ou,
- émettre un quatrième message réseau indiquant la bonne réception du deuxième message réseau,
- sinon, si réception d'un message réseau indiquant la non réception du deuxième message réseau par le premier dispositif électronique de la liste ordonnée ou bien après expiration d'un deuxième temps d'attente prédéterminé, supérieur au premier temps d'attente, mettre à jour la liste ordonnée en supprimant le premier dispositif électronique de la liste ordonnée et revenir à l'étape précédente avec la liste ordonnée mise à jour,
- si le troisième dispositif électronique a reçu le deuxième message réseau indiquant que le deuxième message audio a été reçu par le premier dispositif électronique, alors émettre un quatrième message audio comprenant des paramètres de configuration pour le premier dispositif électronique afin de se connecter au réseau de communication.

2. Procédé selon la revendication précédente, les étapes du procédé étant exécutées par un même dispositif électronique adapté pour recevoir et émettre un message audio.

3. Procédé selon l'une des revendications précédentes, le premier dispositif électronique comprenant un premier module réseau adapté pour se connecter au réseau de communication et un deuxième module réseau adapté pour se connecter à un quatrième dispositif électronique, le quatrième dispositif électronique comprenant un émetteur audio et/ou un récepteur audio, le premier dispositif électronique étant adapté pour, une fois connecté au quatrième dispositif électronique, émettre et/ou recevoir un message audio via le quatrième dispositif électronique.

4. Procédé de configuration automatique d'un dispositif électronique pour se connecter à un point d'accès sans fil d'un réseau de communication, le dispositif électronique comprenant un module radio, adapté pour se connecter au point d'accès sans fil du réseau de communication, et étant adapté pour recevoir et émettre un signal audio, le procédé comprenant les étapes suivantes exécutée par le dispositif électronique :
- émettre un premier message audio comprenant un premier mot clef prédéterminé,
- recevoir un deuxième message audio,
- déterminer si ce deuxième message audio correspond à un deuxième mot clef prédéterminé,
- si oui, alors émettre un troisième message audio comprenant un troisième mot clef prédéterminé, et
- recevoir un quatrième message audio comprenant des paramètres de configuration afin de se connecter au point d'accès sans fil du réseau de communication,
- configurer le module radio afin de se connecter au point d'accès sans fil du réseau de communication.

5. Dispositif électronique comprenant un module réseau permettant de se connecter à un réseau de communication et un module audio adapté pour recevoir un signal audio, le dispositif électronique étant adapté pour exécuter les étapes du procédé selon la revendication 1 exécutées par le deuxième dispositif électronique.

6. Dispositif électronique comprenant un module réseau permettant de se connecter à un réseau de communication et un module audio adapté pour émettre un signal audio, le dispositif électronique étant adapté pour exécuter les étapes du procédé selon la revendication 1 exécutées par le troisième dispositif électronique.

7. Dispositif électronique comprenant un module réseau permettant de se connecter à un réseau de communication et un module audio adapté pour recevoir et émettre un signal audio, le dispositif électronique étant adapté pour exécuter les étapes du procédé selon la revendication 2.

8. Dispositif électronique comprenant un module radio permettant de se connecter à un point d'accès sans fil d'un réseau de communication et un module audio adapté pour recevoir et émettre un signal audio, le dispositif électronique étant adapté pour exécuter les étapes du procédé selon la revendication 4.

9. Système pour une configuration automatique d'un premier dispositif électronique pour se connecter à un point d'accès sans fil d'un réseau de communication, le premier dispositif électronique comprenant un module radio, adapté pour se connecter au point d'accès sans fil du réseau de communication, et étant adapté pour recevoir et émettre un signal audio, le système comprenant au moins :
- un dispositif électronique selon la revendication 5 et un dispositif électronique selon la revendication 6 connectés au réseau de communication, ou bien,
- un dispositif électronique selon la revendication 7 connecté au réseau de communication.

## Patentansprüche

1. Verfahren zur automatischen Konfiguration einer ersten elektronischen Vorrichtung zur Verbindung mit einem Drahtloszugangspunkt eines Kommunikationsnetzes, wobei die erste elektronische Vorrichtung ein Netzmodul umfasst, das geeignet ist, Netznachrichten über das Kommunikationsnetz zu empfangen und auszusenden, und geeignet ist, ein Audiosignal zu empfangen und auszusenden, das Verfahren umfassend die folgenden Schritte, die von einer zweiten elektronischen Vorrichtung ausgeführt werden, die über ein Netzmodul mit dem Kommunikationsnetz verbunden ist und geeignet ist, ein Audiosignal zu empfangen:
- Empfangen einer ersten Audionachricht von der ersten elektronischen Vorrichtung,
- Bestimmen, ob diese erste Audionachricht einem ersten vorbestimmten Schlüsselwort entspricht,
- wenn ja, Aussenden einer ersten Netznachricht, wobei die erste Netznachricht eine Angabe einer Detektion des ersten Schlüsselworts, eine Empfangsqualitätsangabe, die der ersten Audionachricht zugeordnet ist, und eine Kennung der zweiten elektronischen Vorrichtung umfasst, dann,
- Empfangen einer dritten Audionachricht von der ersten elektronischen Vorrichtung,
- Bestimmen, ob diese dritte Audionachricht einem dritten vorbestimmten Schlüsselwort entspricht,
- wenn ja, Aussenden einer zweiten Netznachricht, wobei die zweite Netznachricht eine Angabe einer Detektion des dritten Schlüsselworts, eine Empfangsqualitätsangabe, die der dritten Audionachricht zugeordnet ist, und eine Kennung der zweiten elektronischen Vorrichtung umfasst,
und die folgenden Schritte, die von einer dritten elektronischen Vorrichtung ausgeführt werden, die über ein Netzmodul mit dem Kommunikationsnetzwerk verbunden ist und geeignet ist, ein Audiosignal auszusenden:
- Empfangen wenigstens der ersten Netznachricht über das Kommunikationsnetz,
- Speichern wenigstens der Daten, die in der ersten Netznachricht empfangen werden, in einem Speicher,
- Bestimmen, in Abhängigkeit von den Daten, die im Speicher gespeichert sind, einer geordneten Liste von elektronischen Vorrichtungen, die mit dem Kommunikationsnetzwerk verbunden sind und geeignet sind, eine Audionachricht auszusenden,
- wenn die dritte elektronische Vorrichtung die erste der geordneten Liste ist, dann Aussenden einer zweiten Audionachricht, die ein zweites vorbestimmtes Schlüsselwort umfasst, und Warten eine erste vorbestimmten Wartezeit lang:
- bei Nichtempfang der zweiten Netznachricht bei Ablauf der ersten Wartezeit, Aussenden einer dritten Netznachricht, die den Nichtempfang der zweiten Netznachricht angibt, oder,
- Aussenden einer vierten Netznachricht, die den guten Empfang der zweiten Netznachricht angibt,
- anderenfalls, bei Empfang einer Netznachricht, die den Nichtempfang der zweiten Netznachricht durch die erste elektronische Vorrichtung der geordneten Liste angibt, oder nach Ablauf einer zweiten vorbestimmten Wartezeit, die länger als die erste Wartezeit ist, Aktualisieren der geordneten Liste durch Löschung der ersten elektronischen Vorrichtung der geordneten Liste und Zurückkehren zum vorigen Schritt mit der aktualisierten geordneten Liste,
- wenn die dritte elektronische Vorrichtung die zweite Netznachricht empfangen hat, die angibt, dass die zweite Audionachricht von der ersten elektronischen Vorrichtung empfangen wurde, dann Aussenden einer vierten Audionachricht, die Konfigurationsparameter für die erste elektronische Vorrichtung umfasst, um sich mit dem Kommunikationsnetz zu verbinden.

2. Verfahren nach dem vorhergehenden Anspruch, wobei die Schritte des Verfahrens von ein und derselben elektronischen Vorrichtung ausgeführt werden, die geeignet ist, eine Audionachricht zu empfangen und auszusenden.

3. Verfahren nach einem der vorhergehenden Ansprüche, wobei die erste elektronische Vorrichtung ein erstes Netzmodul, das geeignet ist, sich mit dem Kommunikationsnetz zu verbinden, und ein zweites Netzmodul, das geeignet ist, sich mit einer vierten elektronischen Vorrichtung zu verbinden, umfasst, wobei die vierte elektronische Vorrichtung einen Audiosender und/oder einen Audioempfänger umfasst, wobei die erste elektronische Vorrichtung geeignet ist, sobald die Verbindung mit der vierten elektronischen Vorrichtung hergestellt ist, eine Audionachricht über die vierte elektronische Vorrichtung auszusenden und/oder zu empfangen.

4. Verfahren zur automatischen Konfiguration einer elektronischen Vorrichtung zur Verbindung mit einem Drahtloszugangspunkt eines Kommunikationsnetzes, wobei die elektronische Vorrichtung ein Funkmodul umfasst, das geeignet ist, sich mit dem Drahtloszugangspunkt des Kommunikationsnetzes zu verbinden, und geeignet ist, ein Audiosignal zu empfangen und zu senden, wobei das Verfahren die folgenden Schritte umfasst, die von der elektronischen Vorrichtung ausgeführt werden:
- Aussenden einer ersten Audionachricht, die ein erstes vorbestimmtes Schlüsselwort umfasst,
- Empfangen einer zweiten Audionachricht,
- Bestimmen, ob diese zweite Audionachricht einem zweiten vorbestimmten Schlüsselwort entspricht,
- wenn ja, dann Aussenden einer dritten Audionachricht, die ein drittes vorbestimmtes Schlüsselwort umfasst, und
- Empfangen einer vierten Audionachricht, die Konfigurationsparameter umfasst, um sich mit dem Drahtloszugangspunkt des Kommunikationsnetzes zu verbinden,
- Konfigurieren des Funkmoduls, um sich mit dem Drahtloszugangspunkt des Kommunikationsnetzes zu verbinden.

5. Elektronische Vorrichtung umfassend ein Netzmodul, das es gestattet, sich mit einem Kommunikationsnetz zu verbinden, und ein Audiomodul, das geeignet ist, ein Audiosignal zu empfangen, wobei die elektronische Vorrichtung geeignet ist, die Schritte des Verfahrens nach Anspruch 1 auszuführen, die von der zweiten elektronischen Vorrichtung ausgeführt werden.

6. Elektronische Vorrichtung umfassend ein Netzmodul, das es gestattet, sich mit einem Kommunikationsnetz zu verbinden, und ein Audiomodul, das geeignet ist, ein Audiosignal auszusenden, wobei die elektronische Vorrichtung geeignet ist, die Schritte des Verfahrens nach Anspruch 1 auszuführen, die von der dritten elektronischen Vorrichtung ausgeführt werden.

7. Elektronische Vorrichtung umfassend ein Netzmodul, das es gestattet, sich mit einem Kommunikationsnetz zu verbinden, und ein Audiomodul, das geeignet ist, ein Audiosignal zu empfangen und auszusenden, wobei die elektronische Vorrichtung geeignet ist, die Schritte des Verfahrens nach Anspruch 2 auszuführen.

8. Elektronische Vorrichtung umfassend ein Funkmodul, das es gestattet, sich mit einem Drahtloszugangspunkt eines Kommunikationsnetzes zu verbinden, und ein Audiomodul, das geeignet ist, ein Audiosignal zu empfangen und auszusenden, wobei die elektronische Vorrichtung geeignet ist, die Schritte des Verfahrens nach Anspruch 4 auszuführen.

9. System für eine automatische Konfiguration einer ersten elektronischen Vorrichtung zur Verbindung mit einem Drahtloszugangspunkt eines Kommunikationsnetzes, wobei die erste elektronische Vorrichtung ein Funkmodul umfasst, das geeignet ist, sich mit dem Drahtloszugangspunkt des Kommunikationsnetzes zu verbinden, und geeignet ist, ein Audiosignal zu empfangen und auszusenden, wobei das System wenigstens Folgendes umfasst:
- eine elektronische Vorrichtung nach Anspruch 5 und eine elektronische Vorrichtung nach Anspruch 6, die mit dem Kommunikationsnetz verbunden sind, oder,
- eine elektronische Vorrichtung nach Anspruch 7, die mit dem Kommunikationsnetz verbunden ist.

## Claims

1. Method for automatically configuring a first electronic device to connect to a wireless access point of a communication network, the first electronic device comprising a network module, adapted for receiving and sending so-called network messages over the communication network, and being adapted for receiving and sending an audio signal, the method comprising the following steps, performed by a second electronic device, connected to the communication network via a network module and being adapted for receiving an audio signal, of:
- receiving a first audio message coming from the first electronic device,
- determining whether this first audio message corresponds to a first predetermined keyword,
- if so, sending a first network message, the first network message comprising an indication of detection of the first keyword, an indication of quality of reception associated with the first audio message and an identifier of the second electronic device, then
- receiving a third audio message coming from the first electronic device,
- determining whether this third audio message corresponds to a third predetermined keyword,
- if so, sending a second network message, the second network message comprising an indication of detection of the third keyword, an indication of quality of reception associated with the third audio message and an identifier of the second electronic device,
and the following steps, performed by a third electronic device connected to the communication network via a network module and being adapted for sending an audio signal, of:
- receiving at least the first network message via the communication network,
- recording in a memory at least the data received in the first network message,
- determining, according to the data recorded in the memory, an ordered list of electronic devices connected to the communication network and adapted for sending an audio message,
- if the third electronic device is the first in the ordered list, then sending a second audio message comprising a second predetermined keyword and waiting for a first predetermined waiting time:
- in the absence of reception of the second network message at the expiry of the first waiting time, sending a third network message indicating the non-reception of the second network message, or
- sending a fourth network message indicating the good reception of the second network message,
- otherwise, if reception of a network message indicating the non-reception of the second network message by the first electronic device in the ordered list or after expiry of a second predetermined waiting time, greater than the first waiting time, updating the ordered list by eliminating the first electronic device from the ordered list and returning to the preceding step with the ordered list updated,
- if the third electronic device has received the second network message indicating that the second audio message has been received by the first electronic device, then sending a fourth audio message comprising configuration parameters for the first electronic device in order to connect to the communication network.

2. Method according to the preceding claim, the steps of the method being performed by the same electronic device adapted for receiving and sending an audio message.

3. Method according to one of the preceding claims, the first electronic device comprising a first network module adapted for connecting to the communication network and a second network module adapted for connecting to a fourth electronic device, the fourth electronic device comprising an audio transmitter and/or an audio receiver, the first electronic device is adapted for, once connected to the fourth electronic device, sending and/or receiving an audio message via the fourth electronic device.

4. Method for automatically configuring an electronic device to connect to a wireless access point of a communication network, the electronic device comprising a radio module, adapted for connecting to the wireless access point of the communication network, and being adapted for receiving and sending an audio signal, the method comprising the following steps performed by the electronic device:
- sending a first audio message comprising a first predetermined keyword,
- receiving a second audio message,
- determining whether this audio message corresponds to a second predetermined keyword,
- if so, then sending a third audio message comprising a third predetermined keyword, and
- receiving a fourth audio message comprising configuration parameters in order to connect to the wireless access point of the communication network,
- configuring the radio module in order to connect to the wireless access point of the communication network.

5. Electronic device comprising a network module for connecting to a communication network and an audio module adapted for receiving an audio signal, the electronic device being adapted for performing the steps of the method according to claim 1 that are performed by the second electronic device.

6. Electronic device comprising a network module for connecting to a communication network and an audio module adapted for sending an audio signal, the electronic device being adapted for performing the steps of the method according to claim 1 that are performed by the third electronic device.

7. Electronic device comprising a network module for connecting to a communication network and an audio module adapted for receiving and sending an audio signal, the electronic device being adapted for performing the steps of the method according to claim 2.

8. Electronic device comprising a radio module for connecting to a wireless access point of a communication network and an audio module adapted for receiving and sending an audio signal, the electronic device being adapted for performing the steps of the method according to claim 4.

9. System for automatically configuring a first electronic device to connect to a wireless access point of a communication network, the first electronic device comprising a radio module, adapted for connecting to the wireless access point of the communication network, and being adapted for receiving and sending an audio signal, the system comprising at least:
- an electronic device according to claim 4 and an electronic device according to claim 5 both connected to the communication network, or
- an electronic device according to claim 6 connected to the communication network.
